**Europäisches Patentamt**

**European Patent Office**

**Office européen des brevets**

(19)

(11) Veröffentlichungsnummer: **0 029 005**
**B1**

(12)

# EUROPÄISCHE PATENTSCHRIFT

(45) Veröffentlichungstag der Patentschrift:
**19.10.83**

(21) Anmeldenummer: **80810332.9**

(22) Anmeldetag: **03.11.80**

(51) Int. Cl.³: **G 02 B  23/12,** G 02 B  13/16,
G 02 B  25/00

(54) **Optisches System für Nachtsichtgerät mit Bildverstärker oder Bildwandler.**

(30) Priorität: **09.11.79  CH 10040/79**

(43) Veröffentlichungstag der Anmeldung:
**20.05.81 Patentblatt 81/20**

(45) Bekanntmachung des Hinweises auf die Patenterteilung:
**19.10.83 Patentblatt 83/42**

(84) Benannte Vertragsstaaten:
**DE IT NL**

(56) Entgegenhaltungen:
**CH-A-433 803**
**CH-A-441 806**
**DE-B-1 166 499**
**FR-A-2 167 945**
**FR-A-2 418 476**

(73) Patentinhaber: **KERN & CO. AG Werke für
Präzisionsmechanik Optik und Elektronik,
CH-5001 Aarau (CH)**

(72) Erfinder: **Canzek, Ludvik, Quellmattstrasse 3,
CH-5035 Unterentfelden (CH)**

(74) Vertreter: **Seeger, Jan, c/o Kern & Co. AG,
CH-5001 Aarau (CH)**

Optisches System für Nachtsichtgerät mit Bildverstärker oder Bildwandler

Die Erfindung bezieht sich auf das optische System für ein Nachtsichtgerät mit Bildverstärker oder Bildwandler zur Beobachtung naher und ferner Gegenstände, welches aus einem lichstarken Objektiv und einer Lupe besteht.

Bei Nachtsichtgeräten bildet das Objektiv den Gegenstand, welcher durch die schwache Strahlung des nächtlichen Himmels oder durch eine andere Lichtquelle beleuchtet ist, auf die Kathode der elektronischen Röhre (Bildverstärker oder Bildwandler) ab. Diese liefert auf der Anode ein verstärktes, visuell sichtbares Bild, welches mit einer Lupe betrachtet wird. Die Vergrößerung des optischen Systems ist durch das Verhältnis der Objektiv- und der Lupenbrennweite bestimmt. Für bestimmte Anwendungen, wie z. B. für Nachtsichtbrillen, ist es erwünscht, beide Brennweiten gleich zu halten und keine vergrößernde Wirkung der Optik zu erzeugen.

Die beschriebene Funktion des optischen Systems ist auf den ersten Blick der einer Fernrohroptik gleich. In bezug auf den Abbildungsvorgang bestehen aber grundsätzliche Unterschiede, welche eine direkte Anwendung einer Fernrohroptik bekannter Art für das Nachtsichtgerät verunmöglichen.

Beim Fernrohr bildet das Objektiv den Gegenstand in die Brennebene des Okulars ab. Dieses Zwischenbild entsteht somit in einer dem Objektiv und dem Okular gemeinsamen Abbildungsebene. Es ist ein sogenanntes Luftbild und wird nicht auf einem Schirm aufgefangen. Aus diesem Grund muß das Zwischenbild nicht frei von Abbildungsfehlern sein. Die Abbildungsaberrationen der Teilsysteme, d. h. des Objektivs und des Okulars können sich gegenseitig vermindern oder sogar aufheben, wenn sie entgegengesetzte Vorzeichen haben. Erst das Gesamtsystem gibt ein korrigiertes oder aberrationsfreies Bild. Dadurch ergeben sich für das Berechnen vom Objektiv und Okular wesentliche Erleichterungen, was dann zu Konstruktionen führt, welche einfacher sind als in Fällen, wo jedes Teilsystem einzeln auskorrigiert sein muß.

Bei Geräten mit elektronischer Röhre ist nun eine gegenseitige Kompensation der meisten Abbildungsfehler nicht möglich, weil das vom Objektiv entworfene Bild auf der Kathodenfläche der Röhre in voller Schärfe entstehen muß, woraufhin es elektronisch auf die Anodenfläche übertragen wird. Das Bild auf der Anodenfläche wird dann mit einer Lupe betrachtet. Im Unterschied zu einem Fernrohr haben hier das Objektiv und die Lupe keine gemeinsame Abbildungsebene.

Es lassen sich, bei der hier beschriebenen Anordnung, nur zwei Bildfehler von Teilsystemen kompensieren. Das sind die Verzeichnung und die Bildfeldwölbung, wobei die Korrektur des zweiten Fehlers eine bestimmte Flächenform der elektronischen Röhre bedingt.

Die Verzeichnung verursacht keine Bildunschärfe, sie ändert lediglich den Abbildungsmaßstab innerhalb des Bildfeldes. Es ist bekannt, daß Okulare und Lupen beim Betrachten eines Objekts starke kissenförmige Verzeichnung aufweisen, welche nur mit viel Aufwand korrigierbar ist. Bei einem optischen System, welches als ganzes keine oder nur eine kleine Vergrößerung aufweist, sind die Bildfeldwinkel des Objektivs und der Lupe etwa gleich. Bei einem Weitwinkelobjektiv kann man mit geeigneten Maßnahmen eine relativ große Verzeichnung erreichen. Für ein Nachtsichtgerät wäre es vorteilhaft, ein solches Objektiv zu berechnen, welches eine tonnenförmige Verzeichnung hat und somit die Verzeichnung der Lupe vermindert oder weitgehend kompensiert.

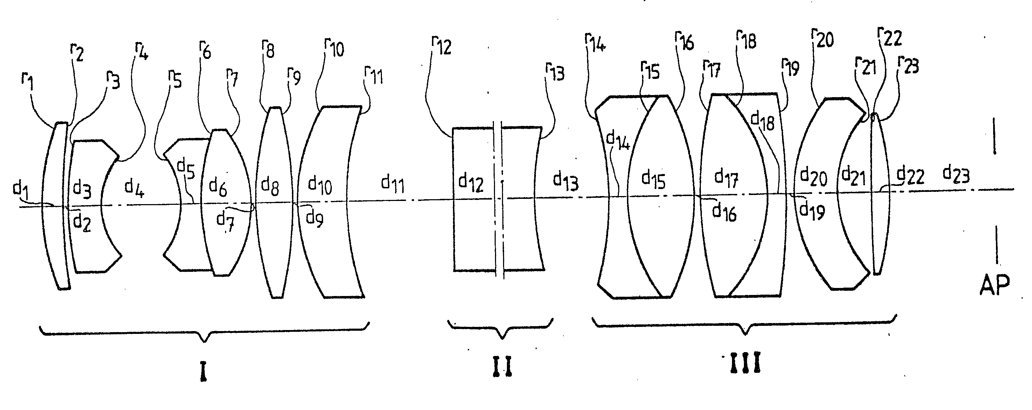

Ist der Astigmatismus eines abbildenden Systems behoben, so ist das Bildfeld im allgemeinen nicht geebnet, sondern gekrümmt. Die Bildfeldwölbung ist bei einem Okular oder einer Lupe schwieriger zu korrigieren als bei einem Weitwinkelobjektiv. Aus der Sicht der Optikkonstruktion ist es wesentlich vorteilhafter, die Anodenfläche zu krümmen als die Kathodenfläche. (In der Schweizer Patentschrift 433 803 ist aus der Abbildung zu ersehen, daß dort das Gegenteil verwirklicht wurde.) Korrigiert man bei der Lupe den Astigmatismus und paßt die Bildfeldwölbung an die Krümmung der Anodenfläche an, dann bildet die Lupe diese Fläche anastigmatisch und geebnet ab.

Aus der Theorie und Praxis der konstruktiven Optik ist bekannt, daß bei Lupen und Okularen die sphärische Aberration sehr schwer korrigierbar ist, besonders noch, wenn diese Systeme eine große Austrittspupille zu erfüllen haben. Die vorhandene sphärische Aberration bewirkt die Unschärfe schon in der Bildmitte, welche sich noch verstärkt in das Bildfeld überträgt. Bei Fernrohrokularen wird dieser Fehler kaum korrigiert, er wird durch eine entsprechende Überkorrektur des Objektivs kompensiert.

Wegen der oben beschriebenen Eigenschaften der Fernrohroptik bekannter Art sind diese optischen Systeme für Nachtsichtgeräte nicht anwendbar.

Es sind optische Systeme bekannt, welche den gegebenen Bedingungen besser entsprechen. Ein solches Objektiv ist z. B. in der Schweizer Patentschrift 521 597 beschrieben. Es hat aber folgende Mängel: Es ist aufwendig gebaut (9 Linsen in 8 Gliedern) und die Bildfläche ist konvex. In der Schweizer Patentschrift 441 806 ist eine Lupe für Nachtsichtgeräte beschrieben, welche aber einen typischen Okularaufbau hat. Wegen der Korrektur der sphärischen Aberration hat die Außenfläche der Augenlinse einen kleinen konkaven Radius und als Feldlinse dient ein doppelt gekittetes System, somit hat die Lupe insgesamt 7 Linsen. Eine solche Konstruktion ist in der Herstellung teuer.

Weitere Lupen für Nachtsichtgeräte sind in der Schweizer Patentschrift 550 411 und in den DE-A-2 657 026, 2 708 691 beschrieben. Diese Beispiele weisen einen Aufbau auf, welcher grundsätzlich für eine Lupe geeigneter ist als das erstgenannte System. So wird z. B. die sphärische Aberration an der Stelle korrigiert, wo sie am stärksten beeinflußbar ist, also am Ort, wo das Öffnungsbündel den größten Durchmesser hat. Hier wird im augenseitigen Teil der Lupe ein als Fernrohrobjektiv bekanntes entkittetes Dublett eingesetzt, mit welchem man die sphärische Aberration der Lupe auskorrigieren kann.

Ein wesentlicher Nachteil aller drei bekannten Lupen ist aber darin zu sehen, daß weder der Astigmatismus noch die Bildfeldwölbung behoben sind. Ein mit solcher Lupe betrachtetes Bild des Gegenstandes erscheint zwar auf dem Anodenschirm scharf in der Bildmitte, aber das außeraxiale Bildfeld ist durch eine Unschärfe gekennzeichnet. Auch bezüglich Koma ereichen die genannten Systeme keine befriedigende Korrektur. Die natürliche Lage der Blende, welche im Bereich der Fehler dritter Ordnung eine komafreie Abbildung gewährleistet, ist von der Lage der tatsächlichen Austrittspupille ziemlich weit entfernt.

Auch die Baulänge der bekannten Lupen ist beträchtlich, ihr Wert übersteigt bei den erwähnten Beispielen das 2fache der Brennweite.

Der Erfindung liegt die Aufgabe zugrunde, ein optisches System für ein Nachtsichtgerät mit einem Bildverstärker oder Bildwandler zur Beobachtung naher und ferner Gegenstände zu berechnen, welches aus einem lichtstarken Objektiv und einer Lupe besteht und bei welchem die aufgezählten Mängel der bekannten Systeme vermindert oder ganz beseitigt sind.

Gelöst wird diese Aufgabe gemäß der vorliegenden Erfindung durch die im Patentanspruch angegebenen Konstruktionsdaten.

Nachfolgend wird ein Ausführungsbeispiel der Erfindung anhand der Zeichnung beschrieben. Das optische System für ein Nachtsichtgerät besteht, vom Gegenstand her betrachtet, aus einem Objektiv I und einer Lupe III. Eine elektronische Röhre II befindet sich zwischen den beiden Teilsystemen. Die Lage der Austrittspupille ist mit AP bezeichnet. In der Tabelle sind die Radien der Linsenflächen bzw. der elektronischen Röhre mit $r_1$ bis $r_{23}$ und die Dicken und Abstände mit $d_1$ bis $d_{23}$ bezeichnet.

| Radien | Dicken und Abstände | Glasarten | |
|---|---|---|---|
| $r_1 = 30.370$ | | | |
| | $d_1 = 2.5$ | LaF 21 | |
| $r_2 = 76.204$ | | | |
| | $d_2 = 0.1$ | | |
| $r_3 = 12.805$ | | | |
| | $d_3 = 4.4$ | SF 11 | |
| $r_4 = 9.539$ | | | |
| | $d_4 = 5.1 + 4.7$ | | |
| $r_5 = -10.730$ | | | |
| | $d_5 = 2.7$ | SF 6 | Objektiv |
| $r_6 = 28.698$ | | | $f_d = 22.122$ |
| | $d_6 = 5.7$ | LaF 21 | $1:1.4$ |
| $r_7 = -15.815$ | | | Bilddurchmesser 18 auf $r_{12}$ |
| | $d_7 = 0.1$ | | |
| $r_8 = 40.125$ | | | |
| | $d_8 = 4.5$ | LaF 21 | |
| $r_9 = -51.604$ | | | |
| | $d_9 = 0.1$ | | |
| $r_{10} = 24.440$ | | | |
| | $d_{10} = 6.3$ | LaF 21 | |
| $r_{11} = 37.218$ | | | |
| | $d_{11} = 13.214$ | | |
| $r_{12} = \infty$ | | | Bildverstärker oder Bildwandler |
| $r_{13} = 40.008$ | | | |
| | $d_{13} = 9.334$ | | |
| $r_{14} = -40.435$ | | | |

3

| Radien | Dicken und Abstände | Glasarten | |
|---|---|---|---|
| | $d_{13} =$ 9.334 | | |
| $r_{14} = -40.435$ | | | |
| | $d_{14} =$ 2 | SFN 64 | |
| $r_{15} =$ 22.270 | | | |
| | $d_{15} =$ 8.1 | LaKN 9 | |
| $r_{16} = -28.050$ | | | |
| | $d_{16} =$ 0.2 | | Lupe |
| $r_{17} =$ 51.788 | | | $f_e$ = 21.985 |
| | $d_{17} =$ 8.3 | LaKN 9 | $s'_{23}$ = −1000 |
| $r_{18} = -18.812$ | | | $\Phi_{AP}$ = 9 |
| | $d_{18} =$ 2.5 | SFN 64 | Bilddurchmesser 18 auf $r_{13}$ |
| $r_{19} = -85.698$ | | | Lage der Austrittspupille |
| | $d_{19} =$ 0.7 | | $d_{23}$ = 12,5 |
| $r_{20} =$ 18.812 | | | Lage der natürlichen Blende |
| | $d_{20} =$ 5.1 | SFN 64 | $z_{23}$ = 11.0 |
| $r_{21} =$ 15.461 | | | |
| | $d_{21} =$ 3.6 | | |
| $r_{22} =$ 437.200 | | | |
| | $d_{22} =$ 2.5 | LaF 21 | |
| $r_{23} = -37.767$ | | | |
| | $d_{23} =$ 12.5 | | |

Das erfindungsgemäße Objektiv ist sphärisch, komatisch und chromatisch korrigiert, das außeraxiale Bildfeld ist anastigmatisch und geebnet. Die Verzeichnung ist tonnenförmig und beträgt −11,2% beim Bildwinkel von 24,6°.

Die erfindungsgemäße Lupe ist sphärisch, komatisch und chromatisch korrigiert, das außeraxiale Bildfeld ist anastigmatisch und weist eine zur Lupe konkave Bildkrümmung mit dem Radius $r_{13}$ = 40,008 mm auf. Die Verzeichnung beim Bildwinkel von 24.6° ist kissenförmig und beträgt 10,8%, wenn man die Anodenfläche vom Ort der Austrittspupille betrachtet. Die Baulänge der Lupe ist 33 mm, bzw. das 1,5fache der Lupenbrennweite.

4

0 029 005

**Patentanspruch**

Optisches System für ein Nachtsichtgerät mit Bildverstärker oder Bildwandler zur Beobachtung naher und ferner Gegenstände, welches aus einem lichtstarken Objektiv und einer Lupe besteht, gekennzeichnet durch folgende Konstruktionsdaten des Objektivs:

| Radien | Dicken und Abstände | Glasarten | |
|---|---|---|---|
| $r_1 = 30.370$ | | | |
| | $d_1 = 2.5$ | LaF 21 | |
| $r_2 = 76.204$ | | | |
| | $d_2 = 0.1$ | | |
| $r_3 = 12.805$ | | | |
| | $d_3 = 4.4$ | SF 11 | |
| $r_4 = 9.539$ | | | |
| | $d_4 = 5.1 + 4.7$ | | |
| $r_5 = -10.730$ | | | |
| | $d_5 = 2.7$ | SF 6 | Objektiv |
| $r_6 = 28.698$ | | | $f_d = 22.122$ |
| | $d_6 = 5.7$ | LaF 21 | $1 : 1.4$ |
| $r_7 = -15.815$ | | | |
| | $d_7 = 0.1$ | | |
| $r_8 = 40.125$ | | | |
| | $d_8 = 4.5$ | LaF 21 | |
| $r_9 = -51.604$ | | | |
| | $d_9 = 0.1$ | | |
| $r_{10} = 24.440$ | | | |
| | $d_{10} = 6.3$ | LaF 21 | |
| $r_{11} = 37.218$ | | | |
| | $d_{11} = 13.214$ | | |

durch folgende Konstruktionsdaten des Bildverstärkers oder Bildwandlers:

$r_{12} = \infty$

$r_{13} = 40.008$

Bildverstärker oder Bildwandler

und durch folgende Konstruktionsdaten der Lupe:

| Radien | Dicken und Abstände | Glasarten | |
|---|---|---|---|
| | $d_{13} = 9.334$ | | |
| $r_{14} = -40.435$ | | | |
| | $d_{14} = 2$ | SFN 64 | |
| $r_{15} = 22.270$ | | | |
| | $d_{15} = 8.1$ | LaKN 9 | |
| $r_{16} = -28.050$ | | | |
| | $d_{16} = 0.2$ | | |
| $r_{17} = 51.788$ | | | Lupe |
| | $d_{17} = 8.3$ | LaKN 9 | $f_e = 21.985$ |
| $r_{18} = -18.812$ | | | $s'_{23} = -1000$ |
| | $d_{18} = 2.5$ | SFN 64 | $\Phi_{AP} = 9$ |
| $r_{19} = -85.698$ | | | Lage der Austrittspupille |
| | $d_{19} = 0.7$ | | $d_{23} = 12,5$ |
| $r_{20} = 18.812$ | | | Lage der natürlichen Blende |
| | $d_{20} = 5.1$ | SFN 64 | $z_{23} = 11.0$ |
| $r_{21} = 15.461$ | | | |
| | $d_{21} = 3.6$ | | |
| $r_{22} = 437.200$ | | | |
| | $d_{22} = 2.5$ | LaF 21 | |
| $r_{23} = -37.767$ | | | |
| | $d_{23} = 12.5$ | | |

## Claim

Optical system for a low-light-level device with image intensifier or image converter for observation of objects at short and long ranges, consisting of a high speed objective and a magnifying lens, characterized by following data of the objective:

| radii | thicknesses and separations | types of glass | |
|---|---|---|---|
| $r_1 = 30.370$ | | | |
| | $d_1 = 2.5$ | LaF 21 | |
| $r_2 = 76.204$ | | | |
| | $d_2 = 0.1$ | | |
| $r_3 = 12.805$ | | | |
| | $d_3 = 4.4$ | SF 11 | |
| $r_4 = 9.539$ | | | |
| | $d_4 = 5.1 + 4.7$ | | |
| $r_5 = 10.730$ | | | |
| | $d_5 = 2.7$ | SF 6 | objective |
| $r_6 = 28.698$ | | | $f_d = 22.122$ |
| | $d_6 = 5.7$ | LaF 21 | $1 : 1.4$ |
| $r_7 = -15.815$ | | | |
| | $d_7 = 0.1$ | | |
| $r_8 = 40.125$ | | | |
| | $d_8 = 4.5$ | LaF 21 | |
| $r_9 = 51.604$ | | | |
| | $d_9 = 0.1$ | | |
| $r_{10} = 24.440$ | | | |
| | $d_{10} = 6.3$ | LaF 21 | |
| $r_{11} = 37.218$ | | | |
| | $d_{11} = 13.214$ | | |

following data of the image intensifier or image converter:

| | | | |
|---|---|---|---|
| $r_{12} = \infty$ | | | image intensiver or image converter |
| $r_{13} = 40.008$ | | | |

and following data of the magnifying lens:

| radii | thicknesses and separations | types of glass | |
|---|---|---|---|
| | $d_{13} = 9.334$ | | |
| $r_{14} = -40.435$ | | | |
| | $d_{14} = 2$ | SFN 64 | |
| $r_{15} = 22.270$ | | | |
| | $d_{15} = 8.1$ | LaKN 9 | |
| $r_{16} = -28.050$ | | | |
| | $d_{16} = 0.2$ | | |
| $r_{17} = 51.788$ | | | magnifying lens; |
| | $d_{17} = 8.3$ | LaKN 9 | $f_e = 21.985$ |
| $r_{18} = -18.812$ | | | $s'_{23} = -1000$ |
| | $d_{18} = 2.5$ | SFN 64 | $\Phi_{AP} = 9$ |
| $r_{19} = -85.698$ | | | position of the exit pupil |
| | $d_{19} = 0.7$ | | $d_{23} = 12,5$ |
| $r_{20} = 18.812$ | | | position of the natural stop |
| | $d_{20} = 5.1$ | SFN 64 | $z_{23} = 11.0$ |
| $r_{21} = 15.461$ | | | |
| | $d_{21} = 3.6$ | | |
| $r_{22} = 437.200$ | | | |
| | $d_{22} = 2.5$ | LaF 21 | |
| $r_{23} = -37.767$ | | | |
| | $d_{23} = 12.5$ | | |

6

## Revendication

Système optique d'un dispositif pour la vision de nuit, comportant un amplificateur électronique de brillance ou un convertisseur d'image, conçu pour l'observation d'objets aussi bien proches qu'éloignés, le système est composé d'un objectiv à grande luminosité et d'une loupe; son objectif présente les caractéristiques suivantes:

| rayons | épaisseurs et séparations | genres de verres | |
|---|---|---|---|
| $r_1$ = 30.370 | | | |
| | $d_1$ = 2.5 | LaF 21 | |
| $r_2$ = 76.204 | | | |
| | $d_2$ = 0.1 | | |
| $r_3$ = 12.805 | | | |
| | $d_3$ = 4.4 | SF 11 | |
| $r_4$ = 9.539 | | | |
| | $d_4$ = 5.1 + 4.7 | | |
| $r_5$ = −10.730 | | | |
| | $d_5$ = 2.7 | SF 6 | objectiv $f_d$ = 22.122 1 : 1.4 |
| $r_6$ = 28.698 | | | |
| | $d_6$ = 5.7 | LaF 21 | |
| $r_7$ = −15.815 | | | |
| | $d_7$ = 0.1 | | |
| $r_8$ = 40.125 | | | |
| | $d_8$ = 4.5 | LaF 21 | |
| $r_9$ = 51.604 | | | |
| | $d_9$ = 0.1 | | |
| $r_{10}$ = 24.440 | | | |
| | $d_{10}$ = 6.3 | LaF 21 | |
| $r_{11}$ = 37.218 | | | |
| | $d_{11}$ = 13.214 | | |

et son amplificateur électronique de brillance ou son convertisseur d'image présente les caractéristiques suivantes:

| | | | |
|---|---|---|---|
| $r_{12}$ = ∞ | | | amplificateur électronique de brillance ou convertisseur d'image |
| $r_{13}$ = 40.008 | | | |
| | $d_{13}$ = 9.334 | | |
| $r_{14}$ = −40.435 | | | |

et sa loupe présente les caractéristiques suivantes:

| rayons | épaisseurs et séparations | genres de verres |
|--------|---------------------------|------------------|
| $r_{14} = -40.435$ | $d_{13} = 9.334$ | |
| | $d_{14} = 2$ | SFN 64 |
| $r_{15} = 22.270$ | $d_{15} = 8.1$ | LaKN 9 |
| $r_{16} = -28.050$ | $d_{16} = 0.2$ | |
| $r_{17} = 51.788$ | $d_{17} = 8.3$ | LaKN 9 |
| $r_{18} = -18.812$ | $d_{18} = 2.5$ | SFN 64 |
| $r_{19} = -85.698$ | $d_{19} = 0.7$ | |
| $r_{20} = 18.812$ | $d_{20} = 5.1$ | SFN 64 |
| $r_{21} = 15.461$ | $d_{21} = 3.6$ | |
| $r_{22} = 437.200$ | $d_{22} = 2.5$ | LaF 21 |
| $r_{23} = -37.767$ | $d_{23} = 12.5$ | |

loupe
$f_e = 21.985$
$s'_{23} = -1000$
$\Phi_{AP} = 9$
position de la pupille de sortie
$d_{23} = 12,5$
position du diaphragme naturel
$z_{23} = 11.0$